# EUROPEAN PATENT SPECIFICATION

(11) **EP 2 772 612 B1**
(45) Date of publication and mention of the grant of the patent: **21.09.2016**
(21) Application number: 12758983.6
(22) Date of filing: 26.03.2012
(51) Int. Cl.: F01B 25/02, F01B 23/10, F03G 7/00, F16H 3/64, F01B 17/02, B60K 6/12

(54) **COMPRESSED AIR ENGINE ASSEMBLY WITH COMPRESSED AIR SUPPLEMENT CIRCUIT**
DRUCKLUFTMOTORANORDNUNG MIT DRUCKLUFTVERSORGUNGSSCHALTUNG
ENSEMBLE MOTEUR À AIR COMPRIMÉ COMPRENANT UN CIRCUIT SUPPLÉMENTAIRE D'AIR COMPRIMÉ

(30) Priority: 28.10.2011 CN 201110331847
(43) Date of publication of application: 03.09.2014
(73) Proprietor: Beijing Xiangtian Huachuang Aerodynamic Force Technology Research Institute Company Limited, Beijing 102488 (CN)
(72) Inventor: ZHOU, Dengrong, Sanhe Hebei 065201 (CN); ZHOU, Jian, Sanhe Hebei 065201 (CN)
(74) Representative: Isarpatent
(86) International application number: PCT/CN2012/073006
(87) International publication number: WO 2013/060113

(56) References cited:
- WO-A1-2010/051668
- CN-A- 1 235 579
- CN-A- 101 413 403
- CN-U- 202 280 478
- CN-U- 202 325 691
- CN-U- 202 326 945
- CN-Y- 2 842 086
- DE-A1- 2 422 672
- JP-A- S56 159 501
- US-A1- 2010 298 081
- US-B1- 6 629 573

## Description

### Technical field

The invention relates to an engine, specially, relates to an air-powered engine assembly which uses the compressed air as the complementary power source.

### Background

Engine is widely used in all walks of life. It is commonly used the internal combustion piston engines utilizing a fuel as the power source in the modem means of transport such as cars, boats, etc.. The engine utilizing fuel as the power source would discharge a gas with many harmful substance to pollute environment because of insufficient fuel combustion on one hand, and on the other hand, the fuel is extracted from petroleum, and the development and utilization of the system using the fuel engine as the power source are increasingly limited by the increasing lack of the petroleum source. So an impending problem is to develop a new, clean and pollution-free alternative energy source or decrease fuel consumption and emissions as far as possible. So the air-powered engine which uses compressed air as the power source meets the need fitly.

Guy Negre, a designer of the French company MDI, earlier studied the compressed air powered engine. He launched the first pure air-powered economy household-level sedan in 2002. It can be referred to FR2731472A1, US6311486B1 and US20070101712A1 etc. about the research on compressed air engine.

An engine operating at fuel supply mode and compressed air supply mode is disclosed in FR2731472A1, the engine uses common fuel such as gasoline or diesel oil on the highways, and when slowly moving in the urban and the suburb, the compressed air (or other pollution-free compressed gas) is injected into the combustion chamber. The engine can decrease the fuel consumption partially, but the emission problem isn't solved because of utilizing fuel supply mode.

In order to further reduce pollution, a pure air-powered engine is disclosed in US6311486B1. This type of engine utilizes three independent chambers: an intake-compression chamber, an expansion and discharge chamber and a constant volume combustion chamber. The intake-compression chamber is connected with the constant volume combustion chamber by a valve, and the constant volume combustion chamber is connected with the expansion and discharge chamber by a valve. One question of the engine is that the compressed air takes a long time to travel from the intake-compression chamber to the expansion and discharge chamber, so it takes a long time to obtain the power source gas for driving piston to do work, at the same time, the high pressure gas discharged from the expansion and discharge chamber are not used, so the operation efficiency and the continuous working period for one charge of the engine are limited.

The research on the domestic compressed air engine is in late start. The current study is mostly in a theoretical study and conceptual design phase and is failed to solve the compressed air emissions and the high-pressure compressed air control and distribution problems. There is still a long way to go for a product process of the compressed air engine.

An air-powered engine assembly used in a vehicle is disclosed in the patent document CN101413403A (the family PCT application is WO2010051668A1) of the present applicant. The engine includes a gas tank, an air distributor, an engine body, a linker, a clutch, an automatic transmission, a differential mechanism and an impeller generator provided in the discharge chamber. The engine utilizes the compressed air to do work without any fuel, so no exhaust gas is discharged, and the "zero emission" is achieved. The exhaust gas is used repeatedly to generate electricity, so it can save the energy source and reduce the cost. But the engine is based on the traditional four-stroke engine, and when the crankshaft rotates through 720 degree, the piston does work once. The high pressure air used as the power source can push the piston to do work when entering into the cylinder, and then discharge, i.e. the strokes of the compressed air engine are intake-expansion stroke and discharge stroke actually. Obviously, the four-stroke engine disclosed in the patent document CN101413403A greatly wastes the effective working stroke, and the efficiency of the engine is limited. And the exhaust gas of the engine can't be recycled and utilized well, and it needs an enough large gas tank to store the high pressure air for working a long time.

Another air-powered engine is disclosed in DE 24 22 672 A.

The object of the invention is to provide an air-powered engine with the complementary compressed air circuit. The invention is aimed at addressing an effectively acting problem and an exhaust gas recycling problem of the air-powered engine in order to achieve a new compressed air engine with economy, efficiency and zero-emissions.

### Summary of the invention

The invention provides an air-powered engine assembly which uses the compressed air as the complementary power source, as recited in claim 1. Preferred features of the invention are set out in the dependent claims.

Thus, in accordance with an aspect of the present invention, an air-powered engine assembly is provided, which includes an engine body, the engine body includes a cylinder, a cylinder head system, an intake pipeline, a discharge pipeline, a piston, a connecting rod, a crankshaft, a discharge camshaft, an intake camshaft, a front gear box system and a back gear box. The said piston is connected to the crankshaft via the connecting rod, said front gear box system is adapted to transmit the movement of the crankshaft and the camshaft. An air throat hole for the compressed air intake and a discharge hole for the exhaust gas discharge are provided on the cylinder head system. The air-powered engine assembly also includes a high pressure gas tank set which is connected to an external charge device via a pipeline and a constant pressure tank which is connected to the high pressure gas tank set via a pipeline. Wherein the said air-powered engine assembly with the electromagnetic auxiliary power unit also includes an intake speed control valve which is communicated with the constant pressure tank via a pipeline, a controller system, a multiple-column power distributor which is connected to the crankshaft of the engine body, a power equipment which is connected to the multiple-column power distributor to receive the power which is passed over the crankshaft, an electronic control unit ECO which controls the intake speed control valve on the basis of the detected signal of a sensor, and a complementary compressed air circuit which is connected to a discharge header to complementally supply to the engine body with the exhaust emissions of the discharge header.

Said complementary compressed air circuit includes an air compressor, an exhaust gas recycle tank, an electro-drive turbine unidirectional suction pump, an exhaust gas muffler, a condenser, a pressure limiting valve, wherein the exhaust gas enters into the exhaust gas muffler through the discharge header and is suctioned in the exhaust gas recycle tank by the electro-drive turbine unidirectional suction pump, the exhaust gas accumulated in the exhaust gas recycle tank is sent to the high pressure gas tank set through the pressure limiting valve after compressed and pressurized by the air compressor and after cooled by the condenser.

In an embodiment of the present invention, said engine is a two-stroke engine.

Preferably, the said complementary compressed air circuit further includes a sequence valve. When the pressure of the exhaust gas after pressurized by the air compressor is less than 15Mpa, the exhaust gas is directly sent to the constant pressure tank through the sequence valve.

Preferably, the air compressor is connected to the multiple-column power distributor by a coupling, so the air compressor is driven by the power transmitted from the multiple-column power distributor to work for compressing the exhaust gas from the exhaust gas recycle tank.

In the exemplary embodiment, a one-way valve is provided between the electro-drive turbine unidirectional suction pump and an exhaust gas recycle tank. The one-way valve prevents the exhaust gas reversely flows from the exhaust gas recycle tank to the electro-drive turbine unidirectional suction pump. Preferably, an exhaust gas filter and/or a one-way valve are provided in the pipeline between the condenser and the high pressure gas tank set. The exhaust gas filter is used for purifying exhaust gas after pressurized, such that the exhaust gas after filtered is suitable to be stored in the high pressure gas tank set. In the meantime, the one-way valve prevents high pressure air from back flowing from the high pressure gas tank set. In another exemplary embodiment, the intake speed control valve can be an electromagnetic proportional valve or combination of electromagnetic proportional valve and pressure reducing valve, such that requirement for compressed air intake cam be easily realized when the engine works at high speed, intermediate speed and low speed.

Preferably, the controller system includes a high pressure common rail constant pressure pipe, a controller upper cover, a controller mid seat and a controller bottom base, the controller upper cover, the controller mid seat and the controller bottom base are connected by bolts removably and hermetically.

In another preferred embodiment, the sensor is an engine speed sensor, or a door-oil potentiometer or a combination of the both.

In another preferred embodiment, the intake pipeline is provided in the said controller upper cover; the intake pipeline is connected to the high pressure common rail constant pressure pipe via threaded connection.

Furthermore, a controller intake valve, a controller valve spring and a controller valve seat are mounted in the controller mid seat; the controller valve is abutted against the controller valve seat under the pre-action of the controller valve spring.

Preferably, a controller tappet which controls the opening and closure of the controller valve is provided in the controller bottom base, and the controller tappet is actuated by the intake camshaft.

In another embodiment, the number of the cylinders of the engine assembly is six, and the crankshafts include six unit bell cranks.

Preferably, the six unit bell cranks are a first bell crank, a second bell crank, a third bell crank, a fourth bell crank, a fifth bell crank and a sixth bell crank individually, and the phase of each bell crank is set up as follows: the phase difference of the first bell crank and the second bell crank is 120 degrees, the phase difference of the second bell crank and the third bell crank is 120 degrees, the phase difference of the third bell crank and the fourth bell crank is 180 degrees, the phase difference of the fourth bell crank and the fifth bell crank is -120 degrees, the phase difference of the fifth bell crank and the sixth bell crank is -120 degrees.
In an embodiment of the present invention, said air-powered engine assembly comprises a multiple-column power distributor for air-powered engine, the said air-powered engine includes an engine, the engine includes a cylinder, a cylinder head system, an intake pipeline, a discharge pipeline, a piston, a connecting rod, a crankshaft, a discharge camshaft, an intake camshaft. The air-powered generator system also includes a high pressure gas tank set which is connected to an external charge device via a pipeline and a constant pressure tank which is connected to the high pressure gas tank set via a pipeline and an intake speed control valve which is communicated with the constant pressure tank via a pipeline. The said multiple-column power distributor includes multiple stages, each stage all include a planetary gear, an inner gear ring and a sun gear wherein the planetary gear is located between the inner gear ring and the sun gear, and engages with the inner gear ring through internal gearing and engages with the sun gear through external gearing.

The multiple-column power distributor of present invention can be connected with crankshaft via various approaches. In the exemplary embodiment, the multiple-column power distributor engages with gear ring on the flywheel of crankshaft via inner gear ring, so as to receive power from the crankshaft.

In the illustrative embodiment of the present invention, the stages of the multiple-column power distributor is five, and it is made up of a first stage, a second stage, a third stage, a fourth stage and a fifth stage. The existence of multi-stage makes the multiple-column power distributor is easy to transmit power of the air-powered engine stably.

Furthermore, the planetary gears in the first stage and the second stage of the multiple-column power distributor are connected by a planetary gear pin. The sun gears in the second stage and the third stage is connected by a sun gear pin. The planetary gears in the third stage and the fourth stage are also connected by a planetary gear pin. The sun gears in the fourth stage and the fifth stage is also connected by a sun gear pin. As such, the power transmission from the first stage to the fifth stage is realized, and the power inputted from the first stage may be outputted from the fifth stage.

In the illustrative embodiment of the present invention, the all planetary gear pins are connected to the planetary gears by a smooth flat key, so as to transmit movement of the first stage to the second stage or transmit movement of the third stage to the fourth stage. Preferably, the planetary gear pin may be a cylindrical pin. Alternatively, the number of the pins in every stage may be three, four, five or the more. Furthermore, The planetary gear pin is also connected to the planetary gear by a spline.

On Another aspect of the present invention, the number of the planetary gears in every stage of the multiple-column power distributor can be an odd number, such as three, five, seven. In the illustrative embodiment, each stage includes five planetary gears and the five planetary gears are distributed uniformly and relative to the sun gear into a circle.

On Another aspect of the present invention, the rotary shaft of the planetary gear in the fifth stage of the said multiple-column power distributor is the output end. So the movement from the crankshaft could be selectively passed to the external equipments.

By comparison with the gear box of the traditional engine, five stages of the planetary is used to transmit power and re-distribute, so it can save labor and reduce the torque vibration during the transmission.

### Brief description of drawings

Preferred but not limited embodiments according to the present invention will be described. These and other characters aspects and advantages of the present invention will be obvious when it is in detail described with reference to the drawings.
Figure 1 is an overall schematic view of an air-powered engine assembly with a two-stroke engine in accordance with the present invention;
Figure 2 is a front view of the engine body of the air-powered engine assembly with a two-stroke engine in fig.1;
Figure 3 is a right side view of the engine body of the air-powered engine assembly with a two-stroke engine in fig.1;
Figure 4 is a left side view of the engine body of the air-powered engine assembly with a two-stroke engine in fig.1;
Figure 5 is a top view of the engine body of the air-powered engine assembly with a two-stroke engine in fig.1;
Figure 6 illustrates a crankshaft-connecting rod-piston assembly of the engine body of the air-powered engine assembly with a two-stroke engine in fig.1, in which shows connection between one of piston-connecting rod units and the cylinder body;
Figure 7 is a structural schematic view of a crankshaft unit of the crankshaft-connecting rod-piston assembly in fig.6;
Figure 8 is a structural schematic view of a camshaft of the engine body in fig.2;
Figure 9A is a perspective view of a controller system of the air-powered engine assembly with a two-stroke engine in fig.1;
Figure 9B is a longitudinal sectional view of the controller system in fig.9A;
Figure 9C is a transversal sectional view of the controller system;
Figure 10A is a perspective view of a front gear box system of the air-powered engine assembly with a two-stroke engine in fig.1;
Figure 10B is a left side view of fig. 10A;
Figure 10C is a partially sectional right side view of fig. 10A;
Figure 11A is a perspective view of a multiple-column power distributor of the air-powered engine assembly with a two-stroke engine in fig.1;
Figure 11B is a transversal sectional view along a longitudinal sectional line in fig. 11A;
Figure 11C is a left side view of fig. 11 A;
Figure 11D is a top view of fig. 11A.

### Embodiments

The following description is exemplary only, and it is in no way to limit the disclosure, the application and the usage. It should be understood that the corresponding reference symbols indicate the same or corresponding components and characters throughout all drawings.

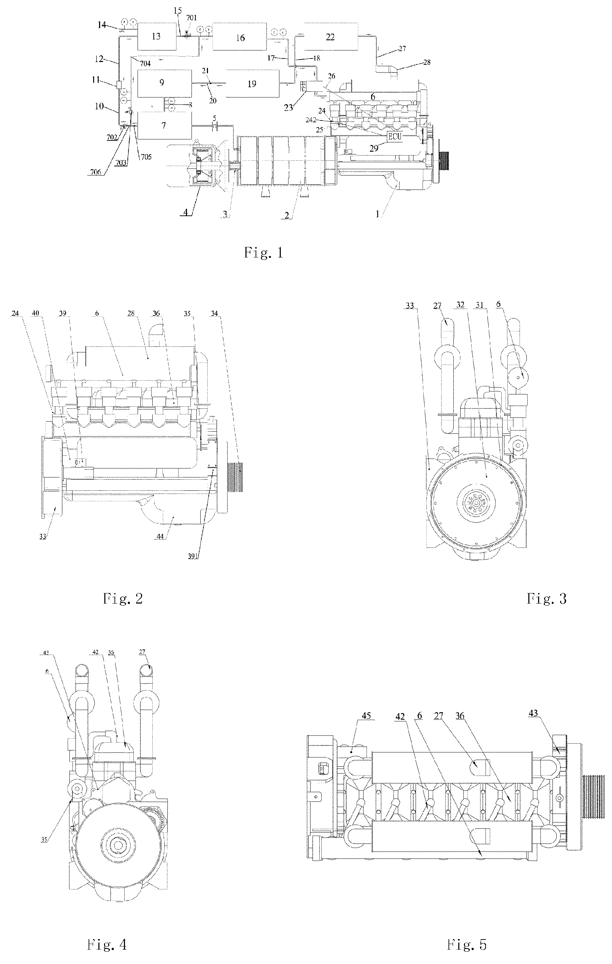

Now referring to fig.1, fig.1 is an overall schematic view of a two-stroke compressed air engine assembly in accordance with the present invention, arrows in the figure show the flow direction of the air flow. In fig.1, the compressed air engine assembly includes an engine body 1, a multiple-column power distributor 2, a power equipment 4, a controller system 6, an air compressor 7, a condenser 11, an exhaust gas recycle tank 9, a high pressure gas tank set 13, a constant pressure tank 16, an intake speed control valve 23, an electro-drive turbine unidirectional suction pump 19, an electronic control unit ECU 29, a pressure limiting valve 702, a sequence valve 703 and an exhaust gas muffler 22. As shown in fig.1, the high pressure air tank set 13 is connected to an external charge station or an external charge device via a compressed air intake pipeline 14 for receiving the requisite high pressure compressed air from an outside device. A flow meter A, a pressure meter P and a manual control switch (not shown) are provided on the compressed air intake pipeline 14. The flow meter A is adapted to measure and monitor the flow rate of the compressed air entering into the high pressure gas tank set 13, while the pressure meter P is adapted to measure and monitor the pressure of the compressed air entering into the high pressure gas tank set 13. When the high pressure gas tank set 13 need to be charged through the external charge device or external charge station, the manual control switch is turned on, and the high pressure compressed air enters into the high pressure gas tank set 13. When the readings of the flow meter A and the pressure meter P on the compressed air intake pipeline 14 reach the defined values, the manual control switch is turned off, and the charge process of the high pressure gas tank set 13 is finished. So the compressed air at the nominal pressure such as 30MPa is acquired. In order to assure the safety of the gas tank, one or two or more safe valves (not shown) are provided on the high pressure gas tank set 13.

The high pressure gas tank set 13 may be made up of one or two or three or four or more high pressure gas tanks with enough volume in series or in parallel, and the number of the high pressure gas tanks up of which the high pressure gas tank set 13 is made is determined on the basis of the actual demand in the application. The high pressure gas tank set 13 is connected to the constant pressure tank 16 via a pipeline 15, a flow meter A and a pressure meter P and a pressure reducing valve 701 for monitoring and controlling the flow rate and the pressure of the compressed air are also provided on the pipeline 15. The pressure reducing valve 701 is used to decompression the high-pressure compressed air provided by the high pressure gas tank set 13 and fed it to the constant pressure tank 16 with an appropriate pressure. The constant pressure tank 16 is adapted to stabilize the pressure of the high pressure air from the high pressure gas tank set 13, and the pressure in the constant pressure tank 16 is slightly lower than the pressure in the high pressure gas tank set 13, such as between 21-25MPa, preferably about 21MPa. A pipeline 17 is provided between the constant pressure tank 16 and the intake speed control valve 23, and a flow meter A and a pressure meter P for monitoring and controlling the flow rate and the pressure of the compressed air are also provided on the pipeline 17. After controlled and adjusted by the intake speed control valve 23, the high pressure air from the constant pressure tank 16 enters into the controller system 6.

Now, the intake speed control valve 23 is described in detail. The function of the intake speed control valve 23 is to control the opening time of an electromagnetic valve on the basis of the command signal from the electronic control unit ECU 29 for determining the compressed air intake quantity. Because of the decompression function of the electromagnetic valve, the electromagnetic valve is combined with a decompression and pressure adjustment valve to form a speed control valve, therefore the rotary speed of the engine can be adjusted in a suitable range. The intake speed control valve 23 is controlled by the control signal 26 from the ECU 29. Many kinds of sensors are optionally provided in the engine body 1, such as a speed sensor for measuring the rotary speed of the engine, a position sensor for deciding the position of the top dead point of the cylinder, an accelerator potentiometer for deciding the position of an accelerator pedal and a temperature sensor for measuring the temperature of an engine block. In accordance with an exemplary embodiment of the present invention, a speed sensor 24 and/or an accelerator potentiometer 242 are shown. The speed sensor 24 may be a variety of speed sensors for measuring the rotary speed of the engine in the prior art, and generally it is provided on the crankshaft 56. The accelerator potentiometer 242 may be a variety of position sensors for measuring the position of the accelerator pedal in the prior art, and generally it is provided in the position of an accelerator pedal. When in a non-vehicle application, an engine load sensor may be similar to the accelerator potentiometer of the accelerator position, such as a torque sensor for monitoring the outputting torque of the engine, a position sensor of an electric current selector knob for controlling the generation current and so on. ECU 29 could calculate on the basis of a speed signal of the speed sensor 24 and/or a position signal of the accelerator potentiometer 242, and send out a control signal 26. The intake speed control valve is controlled by the control signal 26, so the intake speed control valve can meet the demand of high speed, middle speed or low speed, and the engine can rotate at high speed, middle speed or low speed accordingly.

The high pressure compressed air passing through the intake speed control valve flows into controller system 6 via a high pressure pipeline, and the high pressure compressed air is supplied to each cylinder of the engine by means of the controller system 6, the pressure is about 7-18MPa for example, preferably 9-15MPa, more preferably 11-13MPa, so as to drive a piston 51 of the engine to reciprocate in a cylinder system 40 (as shown in figures 2-6), and the reciprocating movement of the piston 51 can be converted to the rotary movement of the crankshaft 56 by means of the connecting rod 54, so the demand for every condition of the engine can be met. The special structure of the controller system 6 will be described later in detail.

With reference to fig.1 again, the rotary movement outputted from the engine body 1 is distributed to application equipments by means of the multiple-column power distributor 2, as shown in fig.1, the application equipments include the air compressor 7 and the power equipment 4. The air compressor 7 may be a traditional vane type compressor or a piston type compressor etc, it also may be a pressurizer unit disclosed in the patent document (CN201261386Y) of the present applicant. The power equipment 4 can be a transmission system, a generator or a transmission system and so on. The multiple-column power distributor 2 may connect with the flywheel on the crankshaft, and it also may connect with a connecting device such as a coupler. The multiple-column power distributor 2 divides the power into two branches, one branch power is distributed to the power equipment 4, and the other branch power is distributed to the air compressor 7. The power equipment 4 is connected to the multiple-column power distributor 2 by the connecting device such as a clutch 3 or the like, and the air compressor 7 is connected to a multiple-column power distributor 2 by the coupler 5 such as a gear. When the engine is set in operation, the rotation of the crankshaft 56 drives the multiple-column power distributor 2 to operate, and then the power is distributed to the power equipment 4 and the air compressor 7, so the power equipment 4 and the air compressor 7 is driven to work.

Because the compressed air engine of the present invention is driven directly by the high pressure air, the high pressure air drives the piston 51 to move during the crankshaft rotating 0-180 degrees. And when the piston continues to move upward due to the inertia after reaching the bottom dead point, the piston continues rotating 180-360 degrees, and the engine operates in the discharge stroke, now the discharged gas has a high pressure yet, such as about 3MPa. On the one hand, the discharged gas with the high pressure is prone to form a high pressure exhaust gas flow when directly discharged into the atmosphere and bring about the exhaust gas noise, on the other hand, the energy of the compressed air is lost. So the exhaust gas of the compressed air engine must be re-used. The complementary compressed air circuit is described as follows.

The exhaust gas discharged by a discharge header 28 of the engine body 1 is transported to an exhaust gas muffler 22 via a pipeline 27, and the exhaust gas after muffle treatment is drawn to the electro-drive turbine unidirectional suction pump 19 via a pipeline 18. A pipeline 20 is provided between the electro-drive turbine unidirectional suction pump 19 and an exhaust gas recycle tank 9, and a one-way valve 21 is provided in the pipeline 20. The one-way valve 21 only allows the exhaust gas flow from the electro-drive turbine unidirectional suction pump 19 to the exhaust gas recycle tank 9, and the reverse flow isn't allowed. A flow meter A and a pressure meter P are provided on the pipeline 8 between the exhaust gas recycle tank 9 and the air compressor 7 for detecting and monitoring the flow rate and the pressure of the exhaust gas after compressed by the air compressor individually. After compressed by the air compressor 7, the pressure of the exhaust gas increases remarkably, and it can reach range from about 10MPa to about 25MPa. The air compressor 7 divides pressurized exhaust gas into two passages through pipeline 705 and complementally supply to the engine 1. Branch pipelines 704 and 706 are provided at downstream of the pipeline 705, the pipeline 706 liquidly connects to pipeline 12 which leads to the high pressure gas tank set. When pressure of exhaust gas which is pressurized by air compressor 7 is over 15MPa, pressurized exhaust gas passes through the pressure limiting valve which opening pressure is set to 15MPa e.g. Then the exhaust gas enters into a condenser 11 via a pipeline 10, after cooled by the condenser, the exhaust gas may be directly transported into the high pressure gas tank set 13 via a pipeline 12, or the exhaust gas may transported into the high pressure gas tank set 13 after passing through an exhaust gas filter (not shown in the figure). The pipeline 705 liquidly connects to pipeline 704 through sequence valve 703. When pressure of exhaust gas which is pressurized by air compressor 7 is less than 15MPa, pressurized exhaust gas passes through the sequence valve ,of which limited pressure is set to 15MPa e.g. (the sequence valve opens when intake pressure is less than 15MPa and automatically closes when intake pressure is over 15MPa), and then enters into the constant pressure tank 16 through pipeline 704. In alternative solutions, opening pressure of the pressure limiting valve and closure pressure of the sequence valve can be set according to actual requirements. For example it can be any pressure between 7MPa and 20MPa. Preferably , it can be any one of 10, 12, 15, 17, and 20MPa. Alternatively, a one-way valve (not shown in the figure) may be provided in the pipeline between the condenser 11 and the high pressure gas tank set 13, and the clean exhaust gas is allowed to unidirectionally flow into the high pressure gas tank set 13 after pressurized. So after working, most of the high pressure compressed air for driving the piston 51 of the engine could be pressurized and purified by means of the complementary compressed air circuit (which includes the exhaust gas muffler, the pressure limiting valve, the sequence valve, the electro-drive turbine unidirectional suction pump, the exhaust gas recycle tank 9, the air compressor 7, the condenser 11 and the connecting pipeline there between) and then recycled back to the high pressure gas tank set, thus the recycle of the exhaust gas could be realized. The existence of the complementary compressed air circuit could not only considerably solve the problem of the noise pollution due to the exhaust gas with a considerable pressure (generally about 3MPa) discharged directly to the atmosphere, but also effectively alleviate the problem of the large volume demand for the high pressure gas tank set 13. In other words, for the high pressure gas tank set 13 with a given volume, the existence of the complementary compressed air circuit considerably increases the continuous working period of the compressed air engine. And in a vehicle or a generator using the compressed air engine, the continuous working period of the vehicle or the generator is increased considerably, and the efficiency of the compressed air engine is improved remarkably.

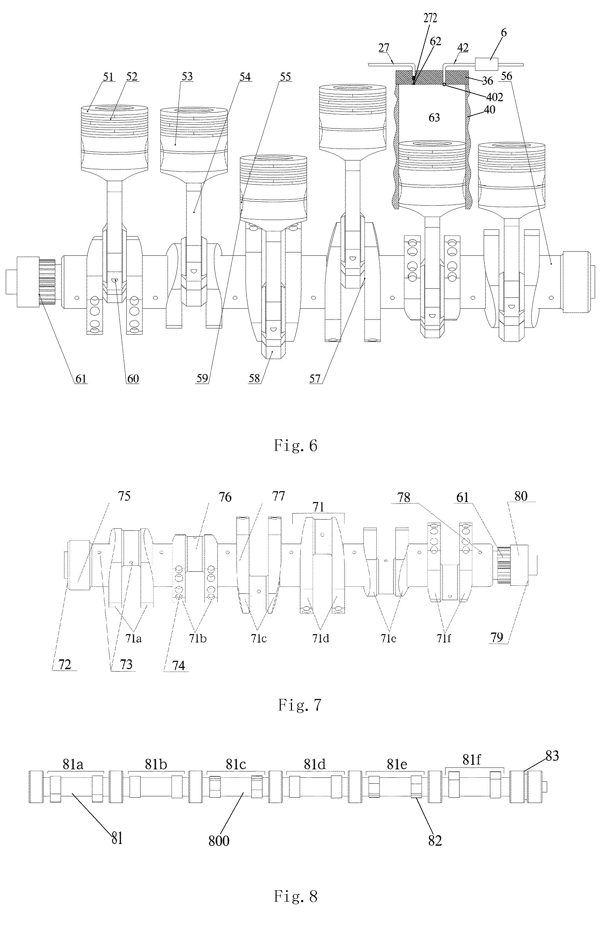

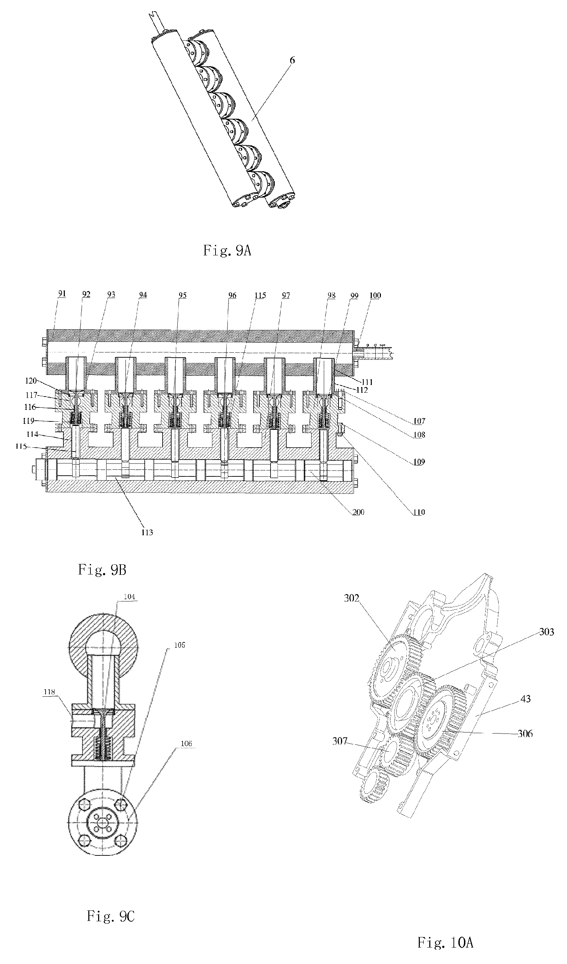

Now return to figures 2-5, figures 2-5 illustrate the view of the engine body 1 in fig.1 from different view points. Wherein fig.2 is a front view of the engine body 1, fig.3 is a right side view of the engine body 1, fig.4 is a left side view of the engine body 1, and fig.5 is a top view of the engine body 1. With reference to fig.6, the engine body 1 includes the cylinder 40, a cylinder head system 36, the intake pipeline 42 (an intake valve throat), the discharge pipeline 27, the piston 51, the connecting rod 54, the crankshaft 56, a discharge camshaft 800 (as shown in fig.8), an intake camshaft 200 (which is mounted in an intake camshaft mounting hole 113 in fig.9), a front gear box system 43 and a back gear box 33. The front gear box system 43 is adapted to drive the crankshaft 56 and the camshaft. A gear ring 31 and a flywheel 32 which can be connected with the multiple-column power distributor 2 are positioned in the back gear box 33. An intake camshaft 200 and a discharge camshaft 800 are positioned in the exemplary embodiment of the engine body 1, they are connected to the crankshaft 56 by the front gear box system 43, and they can rotate suitably along with the crankshaft 56. Because the compressed air intake is controlled and distributed by the controller system 6 directly, the intake valve on the cylinder head system 36 of the engine is eliminated, and only the exhaust valve 62 is positioned thereon. In the exemplary embodiment, each cylinder has four exhaust valves, and the number of the exhaust valves can be one, two, four or six as required. The compressed air from the controller system 6 enters directly into the expansion and discharge chamber 63 through the valve throat 42 (see fig.6), and when the engine is working, the compressed air push the piston 51 to move downwards. The linear movement of the piston 51 is converted to the rotary movement of the crankshaft 56 by means of the connecting rod 54, and the output of the engine can be realized by the rotation of the crankshaft. After the piston 51 reaches the bottom dead point, the crankshaft 56 continue to move due to the inertia, and drives the piston 51 to move from the bottom dead point to the top dead point. Now, the discharge camshaft 800 can open the discharge valve 62 by means of the cam thereon and the corresponding rocker, and the discharge stroke is done. In the exemplary embodiment, the discharged exhaust gas preferably enters into the complementary compressed air circuit.

A starter 39 for starting the engine, a generator 391 which is connected to the crankshaft by a connecting component such as a belt pulley, a cylinder block oil bottom casing 44 for the oil return and an engine oil filter 2 for filtering the engine oil are provided on the engine body 1. The generator 391 may be for example an integral AC generator, a brushless AC generator, an AC generator with a pump or a permanent magnet generator and so on. When the engine works, the generator can supply power to the engine assembly and charge a battery cell or an accumulator cell (not shown in the figures).

Now with reference to fig.6, the fig.6 illustrates the crankshaft-connecting rod-piston system of the engine body of the two-stroke engine assembly in fig.1, wherein the connection of one piston-connecting rod unit and the cylinder 40 is shown. In the illustrative embodiment, there are six cylinders 40 preferably, and correspondingly there are six pistons 51 and six connecting rods 54. Alternatively, the numbers of the pistons 51, the cylinders 40 and the connecting rods 54 can be one, two, four, six, eight, twelve or the others as desired by the skilled in the art. Correspondingly, the crankshaft 56 must be designed matchedly for accommodating the number of the piston-connecting rod units. In the illustrative embodiment, as shown in the fig.6 and fig.7, preferably, the crankshaft 56 has six unit bell cranks, which corresponds with the preferable embodiment of the present invention. With reference to fig.6 again, in the shown connection of one piston-connecting rod unit and the cylinder 40, the high pressure compressed air from the controller system 6 enters into the expansion and discharge chamber 63 via the intake pipeline 41 through a gas throat hole 402 on the cylinder head 36. The high pressure gas expands in the expansion and discharge chamber 63 and does work, and pushes the piston 51 to move downwards, so it is the working stroke. The outputting work in the working stroke may be supplied outwards through the crankshaft and connecting rod system. When the piston 51 moves from the bottom dead point to the top dead point in the cylinder, the discharge valve 62 is opened, the air under a pressure is discharged from the expansion and discharge chamber via the discharge pipeline 27, and which is the discharge stroke. Immediately before the piston reaches the top dead point, the discharge valve 62 is closed, the controller system 6 starts to supply the air to the expansion and discharge chamber 63, and the next cycle begins. Obviously, the engine does work once when the crankshaft 56 of the engine of the present invention rotates one round (360 degrees), and it isn't similar to the traditional four-stroke engine wherein the crankshaft could complete the whole strokes of the intake, the compression, the expansion and the discharge once when rotating two rounds (720 degrees). The present invention is similar to the two-stroke engine, but it is different from the two-stroke engine because generally an intake port is positioned at the bottom of the cylinder in the traditional two-stroke engine, and a scavenging port and a discharge port are provided at a suitable position in the cylinder. In the two-stroke engine of the present invention, the gas throat hole 402 for the intake of the high pressure compressed air and a discharge port 272 are provided on the top of the cylinder, and the opening and closure of the gas throat hole 402 is executed by the intake camshaft 200 via the controller system 6, and the opening and closure of the discharge port is executed by the discharge camshaft 800 which is driven by the crankshaft to rotate and though the opening and closure of the discharge valve 62 controlled by the rocker. So the two-stroke engine of the present invention is completely different form the traditional two-stroke engine, it utilizes effectively the high pressure air which can expand and do work directly, and the piston 51 does work once when the crankshaft 56 rotates one round (360 degrees). So the engine of the present invention can multiply the power one time in comparison with the traditional four-stroke engine in condition of the same gasdisplacement.

Now with reference to fig.5 and fig.6, the crankshaft includes a gear connecting bolt 79, a leading end 80 of the crankshaft, a bevel gear 61, a main journal 78, a unit bell crank 71, a balance weight 77, a crank pin 76, a trailing end 75 of the crankshaft and a flywheel connecting bolt 72. One or more engine oil holes for supplying engine oil to the crankshaft are provided on the main journal 78 and the crank pin 76 on the crankshaft 56. The gear connecting bolt 79 for connecting to the corresponding gear in the front gear box system 43 is provided on the right (as shown direction in the figures) of the leading end 80 of the crankshaft and at an adjacent position. The bevel gear 61 for driving the camshaft to rotate is provided on the left (as shown direction in the figures) of the leading end 80 of the crankshaft and at an adjacent position. The flywheel connecting bolt 72 for fixedly connecting with the flywheel 32 is provided at the outside of the trailing end 75 of the crankshaft and at an adjacent position. One or two or more balance weight holes for adjusting the balance are provided on the balance weight 77. In the preferred embodiment of the present invention, the unit bell cranks 71 of the crankshaft include six unit bell cranks, i.e. a first unit bell crank 71a, a second unit bell crank 71b, a third unit bell crank 71c, a fourth unit bell crank 71 d, a fifth unit bell crank 71e and a sixth unit bell crank 71f. They are corresponding to first to sixth connecting rods 54 or pistons 51. Alternatively, the number of the unit bell cranks 71 may be variable, such as one, two, four, six, eight or the more as the skilled in the art known easily. In the preferred embodiment in the fig.6 and fig.7, the phase of each bell crank is set up as follows: the phase difference of the first bell crank 71a and the second bell crank 71b is 120 degrees, the phase difference of the second bell crank 71b and the third bell crank 71c is 120 degrees, the phase difference of the third bell crank 71c and the fourth bell crank 71d is 180 degrees, the phase difference of the fourth bell crank 71d and the fifth bell crank 71e is -120 degrees, the phase difference of the fifth bell crank 71e and the sixth bell crank 71f is -120 degrees. So the operation sequence of the unit bell cranks is set up as follows: the first and the fifth unit bell cranks work at the same time, then the third and the sixth unit bell cranks work together, and at last the second and the fourth unit bell cranks work together. So the operation sequence of the cylinders of the engine is set up as follows: 1-5 cylinders, 3-6 cylinders and 2-4 cylinders. In the teaching of the present invention, the unit bell cranks and their phase differences and operation sequence which are different from that of the present invention can be set up by the skilled in the art, and which would fall in the scope of the present invention.

With reference to fig.6, the piston 51 is connected to the crankshaft 56 by the connecting rod 54. The connecting rod 54 includes a small end of the connecting rod, a connecting rod body and a big end of the connecting rod. The big end of the connecting rod includes a connecting rod cover 58, a circular space is formed in the connecting rod cover 58, so that the connecting rod cover 58 is connected to the crank pin 76 of the crankshaft by a bearing bush 57 of the connecting rod in the space. An oil stop ring 53 made from tetrafluoroethylene and a piston ring 53 made from tetrafluoroethylene are provided on the peripheral surface of the piston 51. In the illustrative embodiment, four oil piston rings 52 made from tetrafluoroethylene and two stop rings 53 made from tetrafluoroethylene are provided on each piston 51. Alternatively, the numbers of the oil stop rings 53 made from tetrafluoroethylene and the piston rings 53 made from tetrafluoroethylene can be two, three, four or the more. The oil stop rings 53 made from tetrafluoroethylene have the function of stopping the oil, the piston rings 53 made from tetrafluoroethylene have the function of scraping off the oil, they function together to assure the reliable lubrication and seal of the lubricant oil.

Now with reference to fig.8, fig.8 illustrates a structural schematic view of the discharge camshaft 800 of the engine body 1 in fig.2. The discharge camshaft 800 includes a unit cam 81 and a sprocket wheel 83. In the illustrative embodiment, the unit cams 81 include six unit cams, i.e. a first unit cam 81a, a second unit cam 81b, a third unit cam 81c, a fourth unit cam 81d, a fifth unit cam 81e and a sixth unit cam 81f. Alternatively, the number of the unit cams 81 can be one, two, four, six, eight, twelve or the more, and it is dependent on the number of the cylinders of the engine and the number of the discharge valves in each cylinder. In the illustrative embodiment of the present invention, each unit cam 81 includes two cams 82, and each cam 82 can control the opening of the corresponding discharge valve 62. In the preferred embodiment in fig.8, the phase of each cam 81 are set up as follows: the phase difference of the first unit cam 81a and the second unit cam 81b is 120 degrees, the phase difference of the second unit cam 81b and the third unit cam 81c is 120 degrees, the phase difference of the third unit cam 81c and the fourth unit cam 81d is 180 degrees, the phase difference of the fourth unit cam 81d and the fifth unit cam 81e is -120 degrees, the phase difference of the fifth unit cam 81e and the sixth unit cam 81f is -120 degrees. So the operation sequence of the unit cams is set up as follows: the first and the fifth unit cams work at the same time, then the third and the sixth unit cams work together, and at last the second and the fourth unit cams work together. So the operations sequence of the cylinders of the engine is set up as follows: 1-5 cylinders, 3-6 cylinders and 2-4 cylinders. In the teaching of the present invention, the unit cams and their phase differences and operation sequence which are different from that of the present invention can be set up by the skilled in the art, and which would fall in the scope of the present invention.

Now with reference to fig.9, fig.9A - fig.9B are referred to as fig.9 together, and they are views of the controller system 6 of the two-stroke compressed air engine assembly in fig.1. As shown in fig.9, the controller system 6 includes a high pressure common rail constant pressure pipe 91, a controller bottom base 97, a controller mid seat 89, a controller valve 92, a controller spring 94 and a controller upper cover 108. The high pressure common rail constant pressure pipe 91 has a cylindrical shape, as well may be rectangular, triangular etc. The interior of the high pressure common rail constant pressure pipe 91 is a cylindrical channel for example for receiving the high pressure intake gas from the intake speed control valve 23, and the pressure of the compressed air in the channel is generally kept balance, so that the high pressure air initially entering into the expansion and discharge chamber 63 of each cylinder 40 is under the same pressure, which makes the engine stably work. End covers 100 of the high pressure common rail constant pressure pipe are fixedly assembled on two ends of the high pressure common rail constant pressure pipe 91, and the end cover 100 connecting with the intake speed control valve 23 has a projecting flange (not marked in the figures), the flange extends into a pipeline between the high pressure intake speed control valve 23 and the high pressure common rail constant pressure pipe 91, and is fixedly connected to the high pressure pipeline removably by the means of threaded coupling for example. The end covers 100 of the high pressure common rail constant pressure pipe are connected to the high press common rail constant pressure pipe 91 by end cover connecting bolts. Upper cover connecting holes 111 whose number is corresponding to that of the cylinders are provided on the high pressure common rail constant pressure pipe and in the illustrative preferred embodiment; the number of the upper cover connecting holes 111 is six. The cross sectional shape of the controller upper cover 108 along the central line thereof is an inverted T-shaped, there are a cylindrical branch intake pipeline and a circular under surface (not marked in the figures), the branch intake pipeline 112 is connected in the upper cover connecting hole 111 by means of a male thread on the top end thereof, so it is fixedly connected to the high pressure common rail constant pressure pipe 91 removably. The controller upper cover 108 is fixedly connected to the controller mid seat 98 hermetically and removably by connecting bolts for the upper cover and the mid seat or other fastener. The controller mid seat is fixedly connected to the controller bottom base 97 hermetically and removably by connecting bolts 110 of the mid seat and the bottom base or other fastener.

As shown in fig.9, many holes with different diameter are provided in the center of the controller mid seat 98, and they are a controller valve seat hole 120, a controller valve hole 117, an oil seal bush hole 116 and a controller valve spring hole 119 in turn from top to bottom. In the illustrative embodiment, the diameter of the hole 120 is larger than the diameter of the hole 117 and the diameter of the hole 116. The diameter of the hole 117 is larger than the diameter of the hole 116. The diameter of the hole 119 can or can not be the same of the hole 117, but it is larger than the diameter of the hole 116. In a preferred embodiment, the diameter of the hole 119 is equal to the diameter of the hole 117, but a little smaller than the diameter of the hole 120. The controller valve seat is mounted in the controller valve seat hole 120 and supported on the controller valve hole 117. The controller valve hole 117 is a hollow cavity, and it is communicated with a gas throat hole connecting hole 118, so that when the controller valve is opening, the compressed air from the high pressure common rail constant pipe 91 enters into the gas throat hole connecting hole 118 through the branch intake pipeline 112. One end of the gas throat hole connecting hole 118 is communicated with the controller valve hole 117, the other end of the gas throat hole connecting hole is communicated with the gas throat hole 402 of the cylinder head system 36, and the hole is kept normal open, so that when the controller valve 92 is opening, the compressed air is sent to the expansion and discharge chamber 63 and drives the engine to do work. An oil seal bush 99 is mounted in the oil seal bush hole 116 and supported on the controller valve spring 94, and a valve stem (not marked in the figures) of the controller valve 92 passes through the interior of the oil seal bush 99. The oil seal bush 99 has the function of guiding the valve stem besides the function of sealing the controller valve 92. The control valve spring 94 is mounted in the controller valve spring hole 119, and its bottom end is supported on a controller valve spring bottom seat 95 and fixed on the controller valve spring bottom seat 95 by a controller valve lock jaw. When the engine does not work, the controller valve spring 94 is preloaded with a pretension, which pushes the controller valve 92 against the controller valve seat 93, and the controller valve 92 is closed.

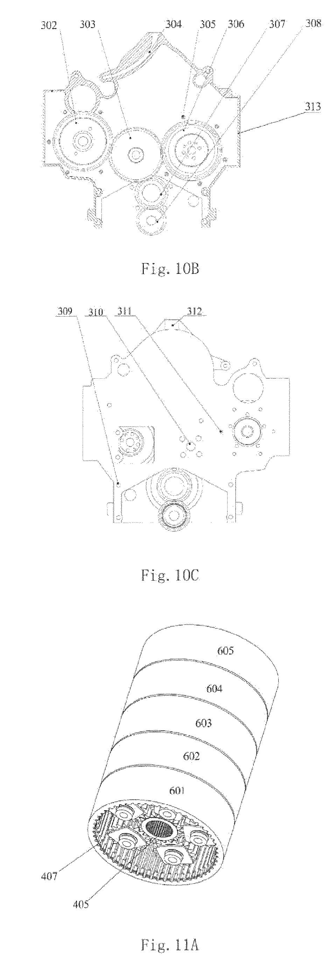

Six illustrative controller tappet mounting hole 114 is provided in the controller bottom base 97, and a variable number of controller tappet mounting holes 114 can be set up on the basis of the number of the cylinders of the engine, such as one, two, four, six, eight, ten or the more. The controller tappet 115 is mounted in the controller tappet mounting hole 114, and follows along with the rotation of the intake camshaft 200 mounted in the intake camshaft mounting hole 113 to reciprocate up and down. When the cylinder 40 of the engine need to be supplied with the high pressure compressed air, the controller tappet 115 is jacked up by the cam of the intake cam shaft 200, and then the controller tappet 115 jacks up the valve stem of the controller valve 92, so that the valve stem overcomes the drag force of the controller valve spring 94 and moves away from the controller valve seat 93, thus the controller valve is opened, the high pressure compressed air enters the expansion and discharge chamber 63 through the high pressure common rail constant pressure pipe 91 to meet the need of gas supply of the engine. After the intake camshaft 200 rotates through an angle along with the crankshaft 56, the valve stem of the controller valve 92 is repositioned on the controller valve seat 93 under the restoring reaction of the controller valve spring 94, the controller valve 92 is closed, and the air supply is finished. Because the compressed air engine of the present invention is a two-stroke engine, the controller valve 92 and the discharge valve 62 each is opened and closed once when the crankshaft 56 rotates one round, so that the cam phases of the intake camshaft 200 and the discharge camshaft 800 and their connection relation with the crankshaft are set up easily, and the detailed structure and movement transmission is illustrated in fig. 10.

Now with reference to fig.10, fig.10A - fig.10C are referred to as fig.10 together, and they are different views of the front gear box system 43 of the two-stroke compressed air engine assembly in fig.1. As shown in fig.10, the front gear box system includes a polygonal cover 313, a transmission gear 308, a crankshaft gear 307, a bridge gear 303, an intake camshaft gear 302 and a discharge camshaft gear 306. The camshaft gear 307 is fixedly connected to one end of the crankshaft 56 passing through the polygonal cover 313, so that the rotation is transmitted from the crankshaft. The transmission gear 308 which is an engine oil pump gear for example is provided under the crankshaft gear 307 (the orientation shown in fig.10B), so as to drive the component of the engine oil pump to rotate by means of the transmission gear 308. The intake camshaft gear 302, the bridge gear 303 and the discharge camshaft gear 306 are provided above the crankshaft gear 307 in turn from left to right (the orientation shown in fig.10B). The crankshaft gear 307 is engaged with the bridge gear 303 to drive the bridge gear 303 to rotate. The bridge gear 303 is engaged with the intake camshaft gear 302 and the discharge camshaft gear 306 on the left side and the right side simultaneously, so that the intake camshaft gear 302 and the discharge camshaft gear 306 are driven to rotate via the crankshaft gear 307 and the bridge gear 303 when the crankshaft 56 rotates, which causes the intake camshaft 200 and the discharge camshaft 800 to rotate, and ultimately the opening and the closure of the intake valve 62 and the controller valve 92 are realized. In the illustrative embodiment, the discharge camshaft gear 306 is fixedly connected to the discharge camshaft 800 directly, so the rotation of the discharge camshaft gear 306 directly makes the discharge camshaft 800 rotating. And a belt pulley (not shown) is fixed in a suitable position on the central shaft of the intake camshaft gear 302, the belt pulley is connected to a belt pulley provided on the intake camshaft 200 by a camshaft transmission belt 35, so the intake camshaft 200 is driven to rotate, and the opening and the closure of the controller valve 92 are realized. Alternatively, a sprocket wheel (not shown) may also be fixed in a suitable position on the central shaft of the intake camshaft gear 302, the sprocket wheel is connected to a sprocket wheel provided on the intake camshaft 200 by a chain, so the intake camshaft 200 is driven to rotate, and the opening and the closure of the controller valve 92 are realized.

Many holes for different function are provided in the polygonal cover 313, such as screw connecting holes 309, screw holes 310 and bolt connecting holes 311. The polygonal cover 313 is connected to the engine block via the screw connecting holes 309, the bridge gear 303 is connected to the polygonal cover 313 via the screw holes 310, and the bolt connecting holes 311 is used to connect the polygonal cover 311 with the engine block. The bolt connecting holes 311 may be welded in a welding post 5 on the polygonal cover 311. An oil hole 304 for the lubricant oil flow and a hoisting ring base 12 are also provided in the polygonal cover 311.

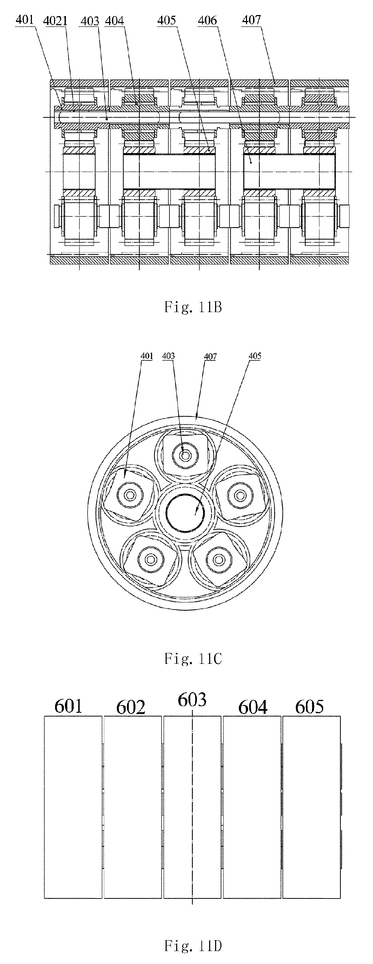

Now with reference to fig.11, fig.11A - fig.11C are referred to as fig.11 together, and they are different views of the multiple-column power distributor 2 of two-stroke compressed air engine assembly in fig.1. As shown in fig.11, in the illustrative embodiment of the present invention, the multiple-column power distributor 2 is a multiple-stage power distributor, and it is made up of a first stage 601, a second stage 602, a third stage 603, a fourth stage 604 and a fifth stage 605 (from left to right shown in fig.10B). Alternatively, the multiple-column power distributor may be made up of the stages other than five stages in the embodiment, such as three stages, four stages, six stages or seven stages. The structure of every stage is the same in general, and each stage includes a planetary gear 401, an inner gear ring 407 and a sun gear 405. The number of the planetary gears 401 in every stage can set up equally, such as three, five, seven or the more. In the illustrative embodiment, each stage includes five planetary gears 401 distributed uniformly. The benefit thereof is that the load of the main shaft is distributed uniformly because of the uniform distribution of the planetary gear, and the transmission can be stable and the transmission power is high. As shown in fig.11B, the planetary gears 401 in the first stage 601 and the second stage 602 are connected by a planetary gear pin 403, so that the first stage 601 and the second stage 602 rotate synchrously. The planetary gear pin 403 is connected to the planetary gear 401 by a smooth flat key 4021 or a spline. In the illustrative embodiment, the planetary gear pin 403 may be a slender cylindrical pin, and its shape also may be rectangular, trapezoidal and semicircular, and the number of the pins in every stage may be two, three, four, five or the more. The sun gears in the second stage 602 and the third stage 603 are connected by a sun gear pin 406, so the united movement of the second stage 602 and the third stage 603 is realized. The connection relation of the third stage 603 and the fourth stage 604 is similar to the connection relation in the first stage 601 and the second stage 602, the connection relation of the fourth stage 604 and the fifth stage 605 is similar to the connection relation of the second stage 602 and the third stage 603. As such, the power transmission from the first stage 602 to the fifth stage 603 of the multiple-column power distributor 4 is realized, and the power inputted from the first stage 601 may be outputted from the fifth stage 605. Particularly, the planetary gear 401 in every stage only spins about itself axis, and it does not revolve about the corresponding sun gear 405, so the inner structure of the multiple-column power distributor is simple and is easy to transmit power stably.

Now the operating principle of the multiple-column power distributor 2 is described. The flywheel 32 is provided on the crankshaft 51 of the engine body 1, the gear ring 31 is fixed on the periphery of the flywheel 32, and the gear ring 31 has an outer gear ring which is engaged with the inner gear ring 407 with inner teeth on the first stage 601 of multiple-column power distributor 2 so as to transmit the movement of the crankshaft 56 to the inner gear ring 407 in the first stage 601. The planetary gear 401 in the first stage 601 is connected to the planetary gear in the second stage 602, the power is transmitted from the first stage 601 to the second stage 602, and the planetary gear 401 in the second stage 602 drives the sun gear in the second stage to rotate. The sun gear 405 in the second stage is connected to the sun gear in third stage by a sun gear pin 406 and drives the sun gear 405 in the third stage to rotate, and the power is transmitted from the second stage 602 to the third stage 603. Be similar to the first stage 601, the third stage 603 transmits the power from the third stage 603 to the fourth stage 604 through the planetary gear 401. Be similar to the second stage, the fourth stage transmits the power from the fourth stage to the fifth stage through the sun gear 405. In the illustrative embodiment of the present invention, the rotary shaft of the planetary gear in the fifth stage 605 is the output end, the power is divided into many branches (in the illustrative embodiment, two branches) and transmitted to an element connected to the multiple-column power distributor 2, for example in the illustrative embodiment of the present invention, the element is the power unit 4 of the generator and the air compressor 7. So the power is outputted from the crankshaft 56 of the engine, and multiple-branch output is realized by the multi-column power distributor 2. By comparison with the gear box of the traditional engine, five stages of the planetary is used to transmit power and re-distribute, so it can save labor and reduce the torque vibration during the transmission.

The present invention is disclosed in detail in the description which includes the preferred embodiments and makes the skilled in the art be able to embody the present invention, which includes the manufacture and utilization of any equipment or system and the introduced process. The claimed scope is defined by the additional claims, and the present invention can be codified, varied or altered without deviation from the scope of the present invention as defined by the claims.

## Claims

1. An air-powered engine assembly which uses the compressed air as the complementary power source, which includes an engine body (1), the engine body including a cylinder (40), a cylinder head system (36), an intake pipeline (42), a discharge pipeline (27), a piston (51), a connecting rod (54), a crankshaft (56), a discharge camshaft (800), an intake camshaft (200), a front gear box system (43) and a back gear box (33); said piston (51) being connected to the crankshaft (56) via the connecting rod (54), said front gear box system (43) being adapted to transmit the movement of the crankshaft (56) and the camshaft (800,200), an air throat hole (402) for the compressed air intake and a discharge hole (272) for the exhaust gas discharge being provided on the said cylinder head system (36); the air-powered engine assembly also includes a high pressure gas tank set (13) which is connected to an external charge device via a pipeline (14) and a constant pressure tank (16) which is connected to the high pressure gas tank set (13) via a pipeline (15), wherein the said air-powered engine assembly also includes an intake speed control valve (23) which is communicated with the constant pressure tank (16) via a pipeline (17), a controller system (6), a multiple-column power distributor (2) which is connected to the crankshaft (56) of the engine body (1), a power equipment (4) which is connected to the multiple-column power distributor (2) to receive the power which is passed over the crankshaft (56), an electronic control unit ECO (29) which controls the intake speed control valve on the basis of the detected signal of a sensor (24,242), and a complementary compressed air circuit which is connected to a discharge header (28) to complementally supply to the engine body (1) with the exhaust emissions of the discharge header (28),
wherein said complementary compressed air circuit includes an air compressor (7), an exhaust gas recycle tank (9), an electro-drive turbine unidirectional suction pump (19), an exhaust gas muffler (22), a condenser (11), a pressure limiting valve (702), wherein the exhaust gas enters the exhaust gas muffler (22) through the discharge header (28) and is drawn into the exhaust gas recycle tank (9) by the electro-drive turbine unidirectional suction pump (19), the exhaust gas accumulated in the exhaust gas recycle tank (9) being sent to the high pressure gas tank set (13) through the pressure limiting valve (702) after compressed and pressurized by the air compressor (7) and after cooled by the condenser (11).

2. The engine assembly according to claim 1, **characterized in that** said engine body (1) is a two-stroke engine.

3. The engine assembly according to any of claims 1 or 2, **characterized in that** said complementary compressed air circuit further includes a sequence valve (703), when the pressure of the exhaust gas after pressurized by the air compressor (7) is less than 15Mpa, said exhaust gas is directly sent to the constant pressure tank (16) through the sequence valve (703).

4. The engine assembly according to any of claims 1 to 3, **characterized in that** said air compressor (7) is connected to the multiple-column power distributor (2) by a coupling, so the air compressor (7) is driven by the power transmitted from the multiple-column power distributor (2) to work for compressing the exhaust gas from the exhaust gas recycle tank (9).

5. The engine assembly according to claim 1 or 2, **characterized in that** said controller system (6) includes a high pressure common rail constant pressure pipe (91), a controller upper cover (108), a controller mid seat (98) and a controller bottom base (97), the controller upper cover (108), the controller mid seat (98) and the controller bottom base being connected by bolts removably and hermetically.

6. The engine assembly according to claim 5, **characterized in that** a controller intake valve (92), a controller valve spring (94), an oil seal bush (99), a controller valve spring bottom base (97) and a controller valve seat (93) are mounted in the said controller mid seat (98), the said controller valve (92) being abutted against the controller valve seat (93) under the pre-action of the controller valve spring (94).

7. The engine assembly according to claim 6, **characterized in that** a controller tappet (115) which controls the opening and closure of the controller valve (92) is provided in the said controller bottom base (97), and the controller tappet (115) is actuated by the intake camshaft (200).

8. The engine assembly according to any of claims 1 to 7, **characterized in that** the said multiple-column power distributor (2) includes multiple stages, each stage all
including a planetary gear (401), an inner gear ring (407) and a sun gear (405), wherein said planetary gear (401) is located between the inner gear ring (407) and the sun gear (405), and engages with the inner gear ring (407) through internal gearing and engages with the sun gear (405) through external gearing.

9. The engine assembly according to claim 8, **characterized in that** said multiple-column power distributor (2) engages with gear ring (31) on the flywheel (32) of crankshaft (56) via inner gear ring (407), so as to receive power from the crankshaft (56).

10. The engine assembly according to claim 9, **characterized in that** the planetary gears (401) in the first stage (601) and the second stage (602) are connected by a planetary gear pin (403), the sun gears (405) in the second stage (602) and the third stage (603) is connected by a sun gear pin (406), the third stage (603) and the fourth stage (604) are connected by a planetary gear pin (403), the fourth stage (604) and the fifth stage (605) are connected by a sun gear pin (405).

11. The engine assembly according to claim 10, **characterized in that** said planetary gear pins are connected to the planetary gears (401) by a smooth flat key (4021), so as to transmit movement of the first stage (601) to the second stage (602) or transmit movement of the third stage (603) to the fourth stage (604).

## Patentansprüche

1. Mit Druckluft betriebene Motoranordnung, die Druckluft als ergänzende Kraftquelle nutzt und die einen Motorkörper (1) aufweist, wobei der Motorkörper Folgendes aufweist: einen Zylinder (40), ein Zylinderkopfsystem (36), eine Einlassrohrleitung (42), eine Auslassrohrleitung (27), einen Kolben (51), eine Pleuelstange (54), eine Kurbelwelle (56), eine Auslassnockenwelle (800), eine Einlassnockenwelle (200), ein vorderes Getriebesystem (43) und ein hinteres Getriebe (33); wobei der Kolben (51) durch die Pleuelstange (54) mit der Kurbelwelle (56) verbunden ist, wobei das vordere Getriebesystem (43) dafür ausgelegt ist, die Bewegung der Kurbelwelle (56) und der Nockenwelle (800, 200) zu übertragen, wobei ein Lufthalsloch (402) für den Drucklufteinlass und ein Auslassloch (272) für den Abgasauslass in dem Zylinderkopfsystem (36) angeordnet sind; wobei die mit Druckluft betriebene Motoranordnung außerdem Folgendes aufweist: einen Hochdruckgastanksatz (13), der mit einer externen Beschickungsvorrichtung durch eine Rohrleitung (14) verbunden ist, und einen Konstantdrucktank (16), der mit dem Hochdruckgastanksatz (13) durch eine Rohrleitung (15) verbunden ist; wobei die mit Druckluft betriebene Motoranordnung außerdem Folgendes aufweist: ein Einlassgeschwindigkeitssteuerventil (23), das mit dem Konstantdrucktank (16) durch eine Rohrleitung (17) in Strömungsverbindung steht, ein Steuerungssystem (6), einen Mehrsäulenleistungsverteiler (2), der mit der Kurbelwelle (56) des Motorkörpers (1) verbunden ist, eine Kraftkomponente (4), die mit dem Mehrsäulenleistungsverteiler (2) verbunden ist, um die Leistung zu empfangen, die über die Kurbelwelle (56) geleitet wird, eine elektronische Steuereinheit ECO (29), die das Einlassgeschwindigkeitssteuerventil auf der Basis des detektierten Signals eines Sensors (24, 242) steuert, und einen Ergänzungsdruckluftkreis, der mit einem Auslasssammelrohr (28) verbunden ist, um dem Motorkörper (1) zusätzlich den Abgasausstoß des Auslasssammelrohres (28) zuzuführen, wobei der Ergänzungsdruckluftkreis Folgendes aufweist:
einen Luftverdichter (7), einen Abgasrückführungstank (9), eine unidirektionale Elektroantriebsturbinensaugpumpe (19), einen Abgasschalldämpfer (22), einen Kondensator (11), ein Druckbegrenzungsventil (702), wobei das Abgas durch das Auslasssammelrohr (28) in den Abgasschalldämpfer (22) eintritt und durch die unidirektionale Elektroantriebsturbinensaugpumpe (19) in den Abgasrückführungstank (9) gesaugt wird, wobei das in dem Abgasrückführungstank (9) akkumulierte Abgas durch das Druckbegrenzungsventil (702) zu dem Hochdruckgastanksatz (13) gesendet wird, nachdem es durch den Luftverdichter (7) komprimiert und druckbeaufschlagt wurde und nachdem es durch den Kondensator (11) gekühlt wurde.

2. Motoranordnung nach Anspruch 1, **dadurch gekennzeichnet, dass** der Motorkörper (1) ein Zweitaktmotor ist.

3. Motoranordnung nach einem der Ansprüche 1 oder 2, **dadurch gekennzeichnet, dass** der Ergänzungsdruckluftkreis des Weiteren ein Sequenzventil (703) aufweist, wobei, wenn der Druck des Abgases nach der Druckbeaufschlagung durch den Luftverdichter (7) niedriger als 15 Mpa ist, das Abgas direkt durch das Sequenzventil (703) zu dem Konstantdrucktank (16) gesendet wird.

4. Motoranordnung nach einem der Ansprüche 1 bis 3, **dadurch gekennzeichnet, dass** der Luftverdichter (7) über eine Kupplung mit dem Mehrsäulenleistungsverteiler (2) verbunden ist, so dass der Luftverdichter (7) durch die Leistung angetrieben wird, die von dem Mehrsäulenleistungsverteiler (2) übertragen wird, um das Abgas aus dem Abgasrückführungstank (90) zu verdichten.

5. Motoranordnung nach Anspruch 1 oder 2, **dadurch gekennzeichnet, dass** das Steuerungssystem (6) Folgendes aufweist: ein Hochdrucksammelleitungskonstantdruckrohr (91), eine obere Steuereinheitabdeckung (108), einen mittleren Steuereinheitsitz (98) und eine untere Steuereinheitbasis (97), wobei die obere Steuereinheitabdeckung (108), der mittlere Steuereinheitsitz (98) und die untere Steuereinheitbasis (97) durch Schraubbolzen lösbar und hermetisch verbunden sind.

6. Motoranordnung nach Anspruch 5, **dadurch gekennzeichnet, dass** ein Steuereinlassventil (92), eine Steuerventilfeder (94), eine Öldichtungsbuchse (99), eine untere Steuerventilfederbasis (97) und ein Steuerventilsitz (93) in dem mittleren Steuereinheitsitz (98) montiert sind, wobei das Steuerventil (92) unter der Vorspannung der Steuerventilfeder (94) gegen den Steuerventilsitz (93) gedrückt wird.

7. Motoranordnung nach Anspruch 6, **dadurch gekennzeichnet, dass** ein Steuerstößel (115), der das Öffnen und Schließen des Steuerventils (92) steuert, in der unteren Steuereinheitbasis (97) angeordnet ist und der Steuerstößel (115) durch die Einlassnockenwelle (200) betätigt wird.

8. Motoranordnung nach einem der Ansprüche 1 bis 7, **dadurch gekennzeichnet, dass** der Mehrsäulenleistungsverteiler (2) mehrere Stufen aufweist, wobei jede Stufe ein Planetenrad (401), einen inneren Zahnkranz (407) und ein Sonnenrad (405) aufweist, wobei sich das Planetenrad (401) zwischen dem inneren Zahnkranz (407) und dem Sonnenrad (405) befindet und mit dem inneren Zahnkranz (407) durch Innenverzahnung im Eingriff steht und mit dem Sonnenrad (405) durch Außenverzahnung im Eingriff steht.

9. Motoranordnung nach Anspruch 8, **dadurch gekennzeichnet, dass** der Mehrsäulenleistungsverteiler (2) den Zahnkranz (31) an dem Schwungrad (32) der Kurbelwelle (56) über den inneren Zahnkranz (407) in Eingriff nimmt, um Leistung von der Kurbelwelle (56) zu erhalten.

10. Motoranordnung nach Anspruch 9, **dadurch gekennzeichnet, dass** die Planetenräder (401) in der ersten Stufe (601) und der zweiten Stufe (602) durch einen Planetenradzapfen (403) verbunden sind, die Sonnenräder (405) in der zweiten Stufe (602) und der dritten Stufe (603) durch einen Sonnenradzapfen (406) verbunden sind, die dritte Stufe (603) und die vierte Stufe (604) durch einen Planetenradzapfen (403) verbunden sind, und die vierte Stufe (604) und die fünfte Stufe (605) durch einen Sonnenradzapfen (405) verbunden sind.

11. Motoranordnung nach Anspruch 10, **dadurch gekennzeichnet, dass** die Planetenradzapfen mit den Planetenrädern (401) durch eine glatte flache Passfeder (4021) so verbunden sind, dass die Bewegung der ersten Stufe (601) zu der zweiten Stufe (602) übertragen wird oder die Bewegung der dritten Stufe (603) zu der vierten Stufe (604) übertragen wird.

## Revendications

1. Ensemble moteur à air comprimé utilisant de l'air comprimé en tant que source d'alimentation complémentaire, comprenant un corps de moteur (1), le corps de moteur comprenant un cylindre (40), un système de culasse (36), une conduite d'admission (42), une conduite d'évacuation (27), un piston (51), une bielle (54), un vilebrequin (56), un arbre à cames d'évacuation (800), un arbre à cames d'admission (200), un système de boîte de vitesses avant (43) et un système de boîte de vitesses arrière (33) ; ledit piston (51) étant relié au vilebrequin (56) par l'intermédiaire de la bielle (54), ledit système de boîte de vitesses avant (43) étant conçu pour transmettre le mouvement du vilebrequin (56) et de l'arbre à cames (800, 200), un trou d'étranglement d'air (402) destiné à l'admission d'air comprimé et un trou d'évacuation (272) destiné à l'évacuation du gaz d'échappement étant ménagés sur ledit système de culasse (36), l'ensemble moteur à air comprimé comprenant également un ensemble réservoir de gaz à haute pression (13) qui est relié à un dispositif de chargement extérieur par l'intermédiaire d'une conduite (14) et un réservoir à pression constante (16) qui est relié à l'ensemble réservoir à haute pression (13) par l'intermédiaire d'une conduite (15), ledit ensemble moteur à air comprimé comprenant également une soupape de régulation de vitesse d'admission (23) qui communique avec le réservoir à pression constante (16) par l'intermédiaire d'une conduite (17), un système de commande (6), un distributeur d'énergie à colonnes multiples (2) qui est relié au vilebrequin (56) du corps de moteur (1), un équipement de puissance (4) qui est relié au distributeur d'énergie à colonnes multiples (2) pour recevoir la puissance qui est transmise par le vilebrequin (56), une unité de commande électronique ECO (29) qui commande la soupape de régulation de vitesse d'admission sur la base du signal détecté d'un capteur (24, 242), et un circuit d'air comprimé complémentaire qui est relié à un collecteur d'évacuation (28) pour alimenter à titre complémentaire le corps de moteur (1) en émissions d'échappement du collecteur d'évacuation (28),
dans lequel ledit circuit d'air comprimé complémentaire comprend un compresseur d'air (7), un réservoir de recyclage du gaz d'échappement (9), une pompe d'aspiration unidirectionnelle à turbine à commande électrique (19), un silencieux pour gaz
d'échappement (22), un condenseur (11), une soupape de limitation de pression (702), dans lequel le gaz d'échappement pénètre dans le silencieux pour gaz d'échappement (22) par le collecteur d'évacuation (28) et est aspiré dans le réservoir de recyclage de gaz d'échappement (9) par la pompe d'aspiration unidirectionnelle à turbine à commande électrique (19), le gaz d'échappement accumulé dans le réservoir de recyclage de gaz d'échappement (9) étant envoyé à l'ensemble réservoir de gaz à haute pression (13) par l'intermédiaire de la soupape de limitation de pression (702), après avoir été comprimé et mis sous pression par le compresseur d'air (7) et après avoir été refroidi par le condenseur (11).

2. Ensemble moteur selon la revendication 1, **caractérisé en ce que** ledit corps de moteur (1) est un moteur à deux temps.

3. Ensemble moteur selon l'une quelconque des revendications 1 et 2, **caractérisé en ce que** ledit circuit d'air comprimé complémentaire comprend en outre une soupape de séquence (703), lorsque la pression du gaz d'échappement, une fois mis sous pression par le compresseur d'air (7), est inférieure à 15 MPa, ledit gaz d'échappement est envoyé directement au réservoir à pression constante (16) par l'intermédiaire de la soupape de séquence (703).

4. Ensemble moteur selon l'une quelconque des revendications 1 à 3, **caractérisé en ce que** ledit compresseur d'air (7) est relié au distributeur d'énergie à colonnes multiples (2) par un accouplement, de manière que le compresseur d'air (7) soit entraîné par l'énergie transmise depuis le distributeur d'énergie à colonnes multiples (2) pour agir en comprimant le gaz d'échappement provenant du réservoir de recyclage de gaz d'échappement (9).

5. Ensemble moteur selon la revendication 1 ou 2, **caractérisé en ce que** ledit système de commande (6) comprend un tuyau à pression constante formant rampe commune à haute pression (91), un couvercle supérieur du dispositif de commande (108), un logement intermédiaire du dispositif de commande (98) et une base inférieure du dispositif de commande (97), le couvercle supérieur du dispositif de commande (108), le logement intermédiaire du dispositif de commande (98) et la base inférieure du dispositif de commande étant reliés par des boulons de façon amovible et hermétique.

6. Ensemble moteur selon la revendication 5, **caractérisé en ce qu'**une soupape d'admission du dispositif de commande (92), un ressort de soupape du dispositif de commande (94), une bague d'étanchéité d'huile (99), une base inférieure de ressort de soupape du dispositif de commande (97) et un siège de soupape du dispositif de commande (93) sont montés dans ledit logement intermédiaire du dispositif de commande (98), ladite soupape du dispositif de commande (92) étant mise en appui contre le siège de soupape du dispositif de commande (93) sous l'effet préalable du ressort de soupape du dispositif de commande (94).

7. Ensemble moteur selon la revendication 6, **caractérisé en ce qu'**un poussoir du dispositif de commande (115) qui commande l'ouverture et la fermeture de la soupape du dispositif de commande (92) est placé dans ladite base inférieure du dispositif de commande (97), et le poussoir du dispositif de commande (115) est actionné par l'arbre à cames d'admission (200).

8. Ensemble moteur selon l'une quelconque des revendications 1 à 7, **caractérisé en ce que** ledit distributeur d'énergie à colonnes multiples (2) comporte plusieurs étages, chaque étage comportant un satellite (401), une couronne dentée intérieure (407) et un planétaire (405), dans lequel ledit satellite (401) est positionné entre la couronne dentée intérieure (407) et le planétaire (405) et entre en prise avec la roue dentée intérieure (407) au moyen d'une denture intérieure et entre en prise avec le planétaire (405) au moyen d'une denture extérieure.

9. Ensemble moteur selon la revendication 8, **caractérisé en ce que** ledit distributeur d'énergie à colonnes multiples (2) entre en prise avec la couronne dentée (31) sur le volant (32) du vilebrequin (56) par l'intermédiaire de la couronne dentée intérieure (407), de manière à recevoir la puissance provenant du vilebrequin (56).

10. Ensemble moteur selon la revendication 9, **caractérisé en ce que** les satellites (401) du premier étage (601) et du deuxième étage (602) sont reliés par un axe de satellite (403), les planétaires (405) du deuxième étage (602) et du troisième étage (303) sont reliés par un axe de satellite (406), le troisième étage (603) et le quatrième étage (604) sont reliés par un axe de satellite (403), le quatrième étage (604) et le cinquième étage (605) sont reliés par un axe de planétaire (405).

11. Ensemble moteur selon la revendication 10, **caractérisé en ce que** lesdits axes de satellites sont reliés aux satellites (401) par une clavette plate et lisse (4021), de manière à transmettre le mouvement du premier étage (601) au deuxième étage (602) ou à transmettre le mouvement du troisième étage (603) au quatrième étage (604).
